# EUROPEAN PATENT APPLICATION

(11) **EP 4 185 014 A1**
(43) Date of publication of application: **24.05.2023**
(21) Application number: 21846551.6
(22) Date of filing: 14.07.2021
(51) Int. Cl.: H04W 48/10

(54) **DATA TRANSMISSION METHOD IN MULTI-LINK SYSTEM, AND DEVICE, SYSTEM AND MEDIUM**

(30) Priority: 20.07.2020 CN 202010699344
(71) Applicant: XGIMI Technology Co., Ltd., Chengdu, Sichuan 610041 (CN)
(72) Inventor: WU, Hao, Chengdu, Sichuan 610041 (CN)
(74) Representative: Casalonga
(86) International application number: PCT/CN2021/106142
(87) International publication number: WO 2022/017229

(57) **Abstract**

The disclosure provides a method for transmitting data in a multi-link system, a device, a system and a medium, and relates to the technical field of communication. The method for transmitting data includes: determining a target terminal device receiving buffered data, and generating a broadcast message according to an address of the target terminal device, pre-established first mapping relationship and pre-established second mapping relationship, where the first mapping relationship include a mapping relationship between addresses of terminal devices, addresses of logical data transceiving stations, association identifiers and link identifiers, and the second mapping relationship include a mapping relationship between the buffered data and the link identifiers, and one association identifier is correspondingly assigned to each terminal device; broadcasting the broadcast message; receiving a data poll message sent by the target terminal device; and sending, in response to the data poll message, the buffered data to the target terminal device on a target link. A technical solution of the disclosure can reduce maintenance cost of wireless local area network (WLAN).

## Description

### Technical Field

The disclosure belongs to the technical field of communication, and in particular relates to a method for transmitting data in a multi-link system, a device and a medium.

### Background

As the number of users increases, application types and traffic demand have put forward increasingly higher requirements for network throughput and time delays. A extremely high throughput (EHT) network can guarantee the performance of a wireless local area network (WLAN) by further improving total throughput and reducing delays.

Specifically, a plurality of data transmission links can be established between a terminal device and a network access device (for example, network access point, AP) for synchronously transmitting data, which can improve data transmission efficiency and achieve high network throughput. Terminal devices in WLAN can include a multi-link device (MLD) and a single-link device. The multi-link device includes a plurality of logical data transceiving station (STA), each of which implements data transmission with the network access device by means of one data transmission link. The network access device assigns a separate association identifier (AID) to the logical data transceiving station corresponding to each data transmission link. An increase in the AID is required as the number of terminal device increases, such that more terminal devices can be accommodated in WLAN. However, due to incompatibility between terminal devices adapted to the increased AIDs and the AID, all the terminal devices in WLAN needed to be replaced with the terminal devices adapted to the increased AIDs, resulting in increased maintenance cost of WLAN.

### Summary

Embodiments of the disclosure provide a method for transmitting data in a multi-link system, a device and a medium, which may reduce maintenance cost of WLAN on the basis of guarantee of normal data transmission between a network access device and a terminal device.

In a first aspect, the embodiment of the disclosure provides a method for transmitting data in a multi-link system. The method for transmitting data is applied to a network access device, and includes:
a target terminal device receiving buffered data is determined, and a broadcast message is generated according to an address of the target terminal device, pre-established first mapping relationship and pre-established second mapping relationship, where the first mapping relationship includes a mapping relationship between addresses of terminal devices, addresses of logical data transceiving stations, association identifiers and link identifiers, and the second mapping relationship include a mapping relationship between the buffered data and the link identifiers, and one association identifier is correspondingly assigned to each terminal device; the broadcast message is broadcasted; a data poll message sent by the target terminal device is received; and in response to the received data poll message, the buffered data are sent to the target terminal device on a target link.

In a second aspect, the embodiment of the disclosure provides a method for transmitting data in a multi-link system. The method for transmitting data is applied to a target terminal device, association identifiers are assigned to terminal devices in a one-to-one correspondence manner, the terminal devices include the target terminal device, and the method for transmitting data includes:
a broadcast message broadcast by a network access device is monitored; the broadcast message is parsed and a data poll message is sent to the network access device under the condition that the broadcast message is determined to represent that the network access device has the buffered data corresponding to the target terminal device by using an AID of the target terminal device; and the buffered data sent by the network access device via a target link determined according to the data poll message are received.

In a third aspect, the embodiment of the present disclosure provides a network access device. The network access device includes:
a processing component configured to determine a target terminal device receiving buffered data, and generating a broadcast message according to an address of the target terminal device, pre-established first mapping relationship and pre-established second mapping relationship, where the first mapping relationship include a mapping relationship between addresses of terminal devices, addresses of logical data transceiving stations, association identifiers and link identifiers, and the second mapping relationship include a mapping relationship between the buffered data and the link identifiers, and one association identifier is correspondingly assigned to each terminal device;
a broadcast component configured to broadcast the broadcast message;
a reception component configured to receive a data poll message sent by the target terminal device; and
a sending component configured to send, in response to the data poll message, the buffered data to the target terminal device on a target link.

In a fourth aspect, the embodiment of the disclosure provides a terminal device, where one association identifier is assigned to each terminal device correspondingly, and the terminal device includes:
a monitoring component configured to monitor a broadcast message broadcast by a network access device;
a parsing component configured to parse the broadcast message;
a sending component configured to send a data poll message to the network access device under the condition that the broadcast message is determined to represent that the network access device has buffered data corresponding to the terminal device by using the association identifier of the terminal device; and
a reception component configured to receive the buffered data sent by the network access device via a target link determined according to the data poll message.

In a first aspect, the embodiment of the disclosure provides a network access device. The network access device includes a processor, a memory, and a program or an instruction stored in the memory and executable on the processor, where the program or instruction implements the method for transmitting data in a multi-link system in a technical solution in the first aspect when executed by the processor.

In a sixth aspect, the embodiment of the disclosure provides a terminal device. The terminal device includes a processor, a memory, and a program or an instruction stored in the memory and executable on the processor, where the program or instruction implements the method for transmitting data in a multi-link system in a technical solution in the second aspect when executed by the processor.

In a seventh aspect, the embodiment of the disclosure provides a multi-link system. The multi-link system includes the network access device in a technical solution of the fifth aspect and the terminal device in a technical solution of the sixth aspect.

In an eighth aspect, the embodiment of the disclosure provides a computer-readable storage medium. The computer-readable storage medium stores a program or instruction, where the program or instruction implements the method for transmitting data in a multi-link system in the technical solution in the first aspect or the method for transmitting data in a multi-link system in the technical solution in the second aspect when executed by a processor.

The embodiments of the disclosure provide the method for transmitting data in a multi-link system, the device, the system and the medium. The network access device generates the broadcast message according to the address of the target terminal device receiving the buffered data, the first mapping relationship and the second mapping relationship. The terminal device may monitor the broadcast message broadcast by the network access device, and the broadcast message may represent that the buffered data of the network access device correspond to the terminal devices. The target terminal device may determine whether the broadcast message represents that the network access device has the buffered data corresponding to the target terminal device by using its own AID. Under the condition that the broadcast message represents that the network access device has the buffered data corresponding to the target terminal device, the data poll message is sent to the network access device, such that the buffered data sent by the network access device via the target link may be received. The first mapping relationship include the mapping relationships between the address of the terminal device, the address of the logical data transceiving station, the AID and the link identifier. One association identifier is assigned to each terminal device correspondingly. Under the condition that the terminal device includes a multi-link device, a plurality of logical data transceiving stations in the same multi-link device correspond to the same AID such that the number of AIDs may be effectively reduced on the basis that data transmission between the network access device and the terminal device may be implemented, and the existing number of the AID may support WLAN to operate normally. On the basis that normal data transmission between the network access device and the terminal device is guaranteed, neither an increase in the AID nor replacement of the terminal device in WLAN is required, thus reducing the maintenance cost of WLAN.

### Brief Description of the Drawings

The disclosure can be better understood from the following description of specific embodiments of the disclosure in conjunction with accompanying drawings, in which, the same or similar reference numerals indicate the same or similar features.
Fig. 1 is a schematic diagram of an example of a network communication architecture provided by an embodiment of the disclosure;
Fig. 2 is a flowchart of a method for transmitting data in a multi-link system applied to a network access device according to an embodiment of the disclosure;
Fig. 3 is a flowchart of a method for transmitting data in a multi-link system applied to a network access device according to another embodiment of the disclosure;
Fig. 4 is a schematic structural diagram of a format of traffic indication map provided by an embodiment of the disclosure;
Fig. 5 is a schematic structural diagram of a format of link indication map provided by an embodiment of the disclosure;
Fig. 6 is a schematic structural diagram of Link bitmap field in Fig. 5;
Fig. 7 is a flowchart of a method for transmitting data in a multi-link system applied to a network access device according to still another embodiment of the disclosure;
Fig. 8 is a flowchart of a method for transmitting data in a multi-link system applied to a target terminal device according to an embodiment of the disclosure;
Fig. 9 is a flowchart of a method for transmitting data in a multi-link system applied to a target terminal device according to another embodiment of the disclosure; and
Fig. 10 is a flowchart of a method for transmitting data in a multi-link system according to an embodiment of the disclosure.

### Detailed Description of the Embodiments

The features and exemplary embodiments of various aspects of the disclosure will be described in details below. In the following detailed description, lots of specific details are put forward in order to provide a thorough understanding of the disclosure. However, it will be apparent for a person skilled in the art that the disclosure can be implemented without some of these specific details. The following description of the embodiment is merely to provide a better understanding of the disclosure by means of illustration of an example of the disclosure. The disclosure is in no way intended to be limited to any specific configuration and algorithm put forth below, but rather covers any adaptation, substitution, and improvement of an element, a component, and an algorithm without departing from the spirit of the disclosure. In the accompanying drawings and the following description, well-known structures and technologies are not shown in order to avoid unnecessarily ambiguity of the disclosure.

Wireless local area network (WLAN) may include terminal devices and network access devices. One network access device may correspond to a plurality of terminal devices. The network access device may specifically include a router, an access point (AP), etc., and is not defined herein. A plurality of data transmission links may be established between the terminal device and the network access device. The plurality of data transmission links may transmit data simultaneously, so as to improve data transmission efficiency and achieve high throughput of the network. The terminal device may include a single-link device and a multi-link device (MLD). Each single-link device transmits data with the network access device by means of one data transmission link. The multi-link device includes a plurality of logical data transceiving stations (STA), and each logical data transceiving station transmits data with the network access device by means of one data transmission link.

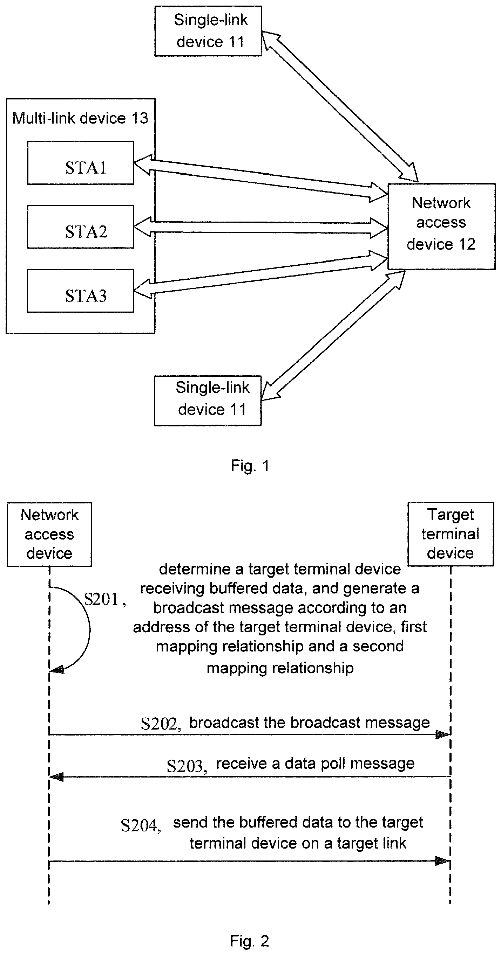

Fig. 1 is a schematic diagram of an example of a network communication architecture for a multi-link system provided by an embodiment of the disclosure. As shown in Fig. 1, a data transmission link is indicated by a double -headed arrow. A single-link device 11 transmits data with a network access device 12 by means of one data transmission link. A multi-link device 13 includes three logical data transceiving stations, namely STA 1, STA2 and STA3. Each logical data transceiving station transmits data with the network access device 12 by means of one data transmission link. If there are buffered data, to be sent to a terminal device, in the network access device 12, the network access device 12 may send the buffered data to the terminal device by means of a data transmission link therebetween. For the convenience of the following description, the data transmission link is simply referred to as a link.

The embodiment of the disclosure provides a method for transmitting data in a multi-link system, a network access device, a terminal device, a multi-link system and a medium. An association identifier (AID) is assigned to each terminal device correspondingly. One single-link device corresponds to one AID. One multi-link device corresponds to one AID, that is, the same AID is assigned to logical data transceiving stations in the same multi-link device. By using a mapping relationship between an address of the terminal device, an address of the logical data transceiving station, the AID and a link identifier, and a mapping relationship between the address of the terminal device, the address of the logical data transceiving station, the AID and the buffered data, a broadcast message is generated to inform a terminal device corresponding to the buffered data of data transmission with the network access device. In the embodiment of the disclosure, on the basis that data transmission is implemented between the terminal device and the network access device, the number of AIDs is effectively reduced, such that the existing number of the AID may support WLAN to operate normally. On the basis that normal data transmission between the network access device and the terminal device is guaranteed, maintenance cost of WLAN is reduced.

The method for transmitting data in a multi-link system is described in detail below. The method for transmitting data in a multi-link system provided by the embodiment of the disclosure may be applied to the network access device. Fig. 2 is a flowchart of a method for transmitting data in a multi-link system applied to a network access device according to an embodiment of the disclosure. As shown in Fig. 2, the method for transmitting data in a multi-link system may include S201 to S204.

S201, a target terminal device receiving buffered data is determined, and a broadcast message is generated according to an address of the target terminal device, pre-established first mapping relationship and pre-established second mapping relationship.

The access device has buffered data to be sent to the terminal device. The target terminal device is a terminal device corresponding to the buffered data, that is, a destination target terminal device to which the buffered data are sent in the subsequent process.

The terminal includes a multi-link device and a single-link device as well. The multi-link device includes more than two logical data transceiving stations. The AIDs corresponding to the logical data transceiving stations in the same multi-link device are the same. For example, if the multi-link device includes three logical data transceiving stations, the AIDs of the three logical data transceiving stations are all I. In some examples, AIDs corresponding to different terminal devices are different, that is, for the terminal devices, the AID is unique, thus guaranteeing that data transmission between a plurality of terminal devices and the network access device may not be confused.

The first mapping relationship include the mapping relationship between the address of the terminal device, the address of the logical data transceiving station, the AID and the link identifier (namely link ID). The first mapping relationship may be determined according to the mapping relationship between the terminal device, the logical data transceiving station included in the terminal device, and the link corresponding to the logical data transceiving station. Under the condition that the terminal device includes the single-link device, the AID in the first mapping relationship includes the AID of the single-link device, and the address of the logical data transceiving station corresponding to the single-link device may be default or the same as the address of the terminal device. Under the condition that the terminal device includes the multi-link device, the AID in the first mapping relationship includes the AID of the logical data transceiving station in the multi-link device, and the first mapping relationship may be pre-stored in the network access device in the form of a table, which is not defined herein. In the first mapping relationship, the mapping relationship between the address of the terminal device, the address of the logical data transceiving station, the AID and the link identifier may also be divided into two or more mapping relations, which is not defined herein.

In some examples, the first mapping relationship may include a first mapping relation and a second mapping relation. The first mapping relation includes a mapping relationship between the address of the terminal device and the AID. The second mapping relation includes a mapping relationship between the address of the terminal device, the address of the logical data transceiving station and the link identifier. The first mapping relation and the second mapping relation may be stored in the form of tables respectively. For example, Table 1 shows the mapping relationship between the AID and the address of the terminal device. Table 2 shows the mapping relationship between the address of the multi-link device of the terminal device, the address of the logical data transceiving station in the multi-link device and link identifier. The first mapping relationship may be obtained combining Table 1 with Table 2.

**Table 1**

| AID | Address of a target terminal device |
|---|---|
| 1 | STAX-Address |
| 2 | STAY-Address |
| 3 | STAZ-Address |
| 4 | MLD1-Address |

**Table 2**

| Address of a multi-link | Address of a logical data | Link identifier |
|---|---|---|
| MLD1-Address | STA1-Address | Link1 |
| MLD1-Address | STA2-Address | Link2 |
| MLD1-Address | STA3-Address | Link3 |

According to Table 1 and Table 2, WLAN includes three single-link devices and one multi-link device. The three single-link devices are STAX, STAY and STAZ. Correspondingly, the addresses of the three single-link devices are STAX-Address, STAY-Address and STAZ-Address respectively. The multi-link device is MLD1. The multi-link device MLD1 includes three logical data transceiving stations, namely STA1, STA2 and STA3. Correspondingly, the address of the multi-link device MLD1 is MLDI-Address. The addresses of the three logical data transceiving stations of the multi-link device MLD1 are STA1-Address, STA2-Address and STA3-Address respectively. The AIDs corresponding to the three logical data transceiving stations of the multi-link device MLD1 are the same, namely 4. The link identifier of the link corresponding to the logical data transceiving station STA1 is LINK1. The link identifier of the link corresponding to the logical data transceiving station STA2 is Link2. The link identifier of the link corresponding to the logical data transceiving station STA3 is Link3.

In some other examples, the first correspondence may include a third mapping relation and a fourth mapping relation. The third mapping relation includes a correspondence between an address of a logical data transceiving station on each link of the network access device and the AID. The fourth mapping relation includes a mapping relationship between the address of the terminal device, the address of the logical data transceiving station and the link identifier. The third mapping relation and the fourth mapping relation may be stored in the form of tables respectively. The third mapping relation may further include a mapping relationship between a single-link device on each link of the network access device and the AID. In the third mapping relation, the mapping relationship between the address of the logical data transceiving station on one link and the AID may be shown in a table. For example, Table 3 shows the mapping relationship between the AID on link 1 and the address of the logical data transceiving station. Table 4 shows the mapping relationship between the AID on link 2 and the address of the logical data transceiving station. Table 5 shows the mapping relationship between the AID on link 3 and the addresses of logical data transceiving stations. Table 6 shows the mapping relationship between the address of the multi-link device in the terminal device, the address of the logical data transceiving station in the multi-link device and the link identifier. From Table 3 to Table 6, the first mapping relationship may be obtained.

**Table 3**

| AID | Address of a logical data transceiving station or address of a single-link device |
|---|---|
| ...... | ...... |
| 42 | A2-address |
| 54 | STAI-address |

**Table 4**

| AID | Address of a logical data transceiving station or address of a single-link device |
|---|---|
| ...... | ...... |
| 24 | A3-address |
| 54 | STA2-address |

**Table 5**

| AID | Address of a logical data transceiving station or address of a single-link device |
|---|---|
| ...... | ...... |
| 53 | A4-address |
| 54 | STA3-address |

**Table 6**

| Address of a multi-link device | Address of a logical data | Link identifier |
|---|---|---|
| MLD1-Address | STA1-Address | Link1 |
| MLD1-Address | STA2-Address | Link2 |
| MLD1-Address | STA3-Address | Link3 |

According to Table 3 to Table 6, WLAN includes a plurality of single-link devices and one multi-link device. The network access device corresponds to three links, namely, link 1, link 2 and link 3. The link 1 corresponds to the single-link device A2 and the logical data transceiving station STA1 of the multi-link device MLD1, and Table 3 shows the address A2-address of the single-link device A2 and the address STA1-Address of the logical data transceiving station STA1 of the multi-link device MLD1. The link 2 corresponds to the single-link device A3 and the logical data transceiving station STA2 of the multi-link device MLD1. Table 4 shows the address A3-address of the single-link device A3 and the address STA2-address of the logical data transceiving station STA2 of the multi-link device MLD1. The link 3 corresponds to the single-link device A4 and the logical data transceiving station STA3 of the multi-link device MLD1. Table 5 shows the address A4-address of the single-link device A4 and the address STA3-address of the logical data transceiving station STA3 of the multi-link device MLD1. The AIDs of the logical data transceiving stations STA1, STA2 and STA3 of the multi-link device MLD1 are the same, namely 54. Table 6 shows the link identifiers corresponding to the logical data transceiving stations STA1, STA2 and STA3 of the multi-link device MLD1.

The second mapping relationship includes the mapping relationship between the buffered data and the link identifier. Specifically, a mapping relationship between a traffic identifier (TID) of the buffered data and the link identifier may be used to represent the mapping relationship between the buffered data and the link identifier. The second mapping relationship may be stored in the form of a table. For example, Table 7 shows the mapping relationship between the traffic identifier and the link identifier of the buffered data.

**Table 7**

| Traffic identifier of buffered data | Link identifier |
|---|---|
| 0 | Link1, Link2, Link3 |
| 1 | Link2, Link3 |
| 2 | Link, 1 |

The link identifier of Link1 is Link1, the link identifier of Link2 is Link2, and the link identifier of link 3 is Link3. According to Table 7, if the traffic identifier of the buffered data in the network access device is 0, the buffered data may be transmitted by means of at least one of link 1, link 2 and link 3. If the traffic identifier of the buffered data in the network access device is 1, the buffered data may be transmitted by means of at least one of link 2 and link 3. If the traffic identifier of the buffered data in the network access device is 2, the buffered data may be transmitted by means of the link 1.

If the target terminal device includes the multi-link device, according to an address of a target multi-link device receiving the buffered data, by means of the above first mapping relationship and second mapping relationship, information such as the AID corresponding to the target multi-link device, a link identifier of an available link for transmitting the buffered data, and the address of the logical data transceiving station that may receive the buffered data may be obtained, and the broadcast message may be generated according to the obtained information.

If the target terminal device includes the single-link device, according to an address of a target single-link device receiving the buffered data, by means of the above first mapping relationship and second mapping relationship, information such as the AID corresponding to the target single-link device and a link identifier of an available link for transmitting the buffered data may be obtained, and the broadcast message may be generated according to the obtained information.

The broadcast message may include information for representing the target terminal device and the available link for transmitting the buffered data, such that the terminal device monitoring the broadcast message may determine whether that the terminal device itself is the target terminal device, and whether the terminal device needs to send a data poll message to the network access device and receive the buffered data sent by the network access device.

The number of target terminal devices may be one or two or more, which is not defined herein. The terminal device may be a multi-link device or a single-link device, which is not defined herein.

Correspondingly, a broadcast message may carry information related to one target terminal device or information related to two or more target terminal devices, which is not defined herein.

S202, a broadcast message is broadcast.

The broadcast message broadcast by the network access device may be monitored by the terminal that may transmits data with the network access device. In some examples, the broadcast message may be in the format of Beacon, which is not defined herein.

S203, a data poll message sent by the target terminal device is received.

After the broadcast message is received, merely the target terminal device among the terminal devices that may transmit data with the network access device may respond to the monitored broadcast message and send the data poll message to the network access device. The data poll message is configured to request the network access device to send the corresponding buffered data to the target terminal device.

S204, in response to the received data poll message, the buffered data are sent to the target terminal device on a target link.

The target link may be determined by the terminal device or the network access device, and is not defined herein. However, the target link needs to be at least one of links corresponding to the traffic identifier of the transmitted cache data, and the number of target links is not defined herein.

In some examples, the data poll message may be sent by means of a PS-POLL frame, or other formats, which is not defined herein.

In the embodiment of the disclosure, the network access device generates the broadcast message according to the address of the target terminal device receiving the buffered data, the first mapping relationship and the second mapping relationship. The broadcast message is used to inform the terminal device corresponding to the buffered data of data transmission with the network access device The first mapping relationship include the mapping relationship between the address of the terminal device, the address of the logical data transceiving station, the AID and the link identifier. One association identifier is assigned to each terminal device correspondingly. Under the condition that the terminal device includes a multi-link device, a plurality of logical data transceiving stations in the same multi-link device correspond to the same AID such that the number of AIDs may be effectively reduced on the basis that data transmission between the network access device and the terminal device may be implemented, and the existing number of the AID may support WLAN to operate normally. On the basis that normal data transmission between the network access device and the terminal device is guaranteed, neither an increase in the AID nor replacement of the terminal device in WLAN is required, thus reducing the maintenance cost of WLAN.

In some examples, under the condition that the data poll message in the above embodiment includes an AID corresponding to the target terminal device, the target link may be at least one available link, corresponding to the buffered data, between the network access device and the target terminal device. The available link is a link that may be used to transmit the buffered data between the network access device and the target terminal device. Under the condition that there is only one link that may used to transmit the buffered data between the network access device and the target terminal device, that is only one available link, the target link is the link. Under the condition that there are two or more links that may used to transmit the buffered data between the network access device and the target terminal device, that is two or more available links, the target link comprises at least one of the two or more links.

For example, the target terminal device is a multi-link device. The multi-link device includes three logical data transceiving stations, namely STA1, STA2 and STA3. STA1 corresponds to link 1, STA2 corresponds to link 2, and STA3 corresponds to link 3. If the mapping relationship between the traffic identifier of the buffered data and the link identifier is as shown in Table 7 in the above embodiment, and the traffic identifier of the buffered data corresponding to the target terminal device in the network access device is 0, then the available links include link 1, link 2 and link 3. One, two or three links among link 1, link 2 and link 3 may be selected as the target link.

In some another examples, under the condition that the data poll message in the above embodiment includes the AID corresponding to the target terminal device, the target link may be the link for the network access device to receive the data poll message. The network access device receives the data poll message by means of the link with the target terminal device, and the link used for receiving the data request may be used as the target link.

In still some another examples, under the condition that the data poll message in the above embodiment includes an AID and an expected link identifier corresponding to the target terminal device, and the target link may be a link corresponding to the expected link identifier. The link identified by the expected link identifier belongs to the available link between the network access device and the target terminal device. The network access device takes the link corresponding to the expected link identifier as the target link.

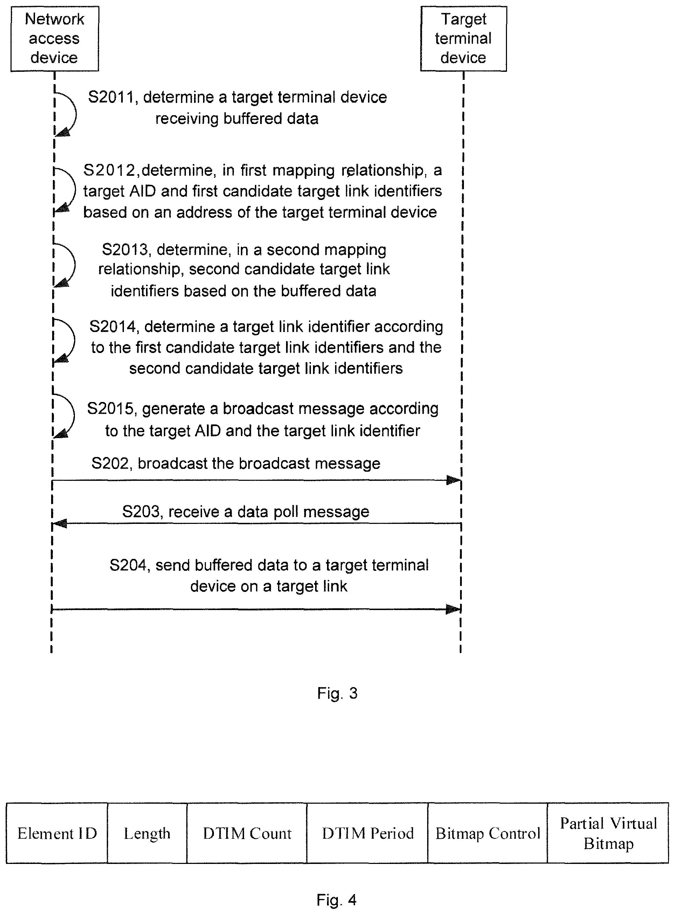

Fig. 3 is a flowchart of a method for transmitting data in a multi-link system applied to a network access device according to another embodiment of the disclosure. Fig. 3 is different from Fig. 2 in that S201 in Fig. 2 may be detailed into S2011 to S2015 in Fig. 3.

S2011, a target terminal device receiving buffered data is determined.

S2012, based on an address of the target terminal device, a target AID and first candidate target link identifiers corresponding to the address of the target terminal device are determined in first mapping relationship.

The first mapping relationship includes a mapping relationship between the address of the terminal device that may transmit data with the network access device, the address of the logical data transceiving station, the AID and the link identifier, and correspondingly, the first mapping relationship also include the mapping relationship between the address of the terminal device that may transmit data with the network access device, the AID and the link identifier. In the first mapping relationship, the AID corresponding to the address of the target terminal device, that is, the target AID, and the link identifier corresponding to the address of the target terminal device, that is, a first candidate target link identifier, may be found. The link identified by the first candidate target link identifier is a link that may be used for data transmission between the network access device and the target terminal device.

S2013, based on the buffered data, second candidate target link identifiers corresponding to the buffered data are determined in a second mapping relationship.

Different buffered data in the network access device may be sent to the target terminal device by means of different links. For example, if the target terminal device includes the multi-link device, the multi-link device includes three logical data transceiving stations, and each logical data transceiving station transmits data with the network access device by means of one link, that is, the network access device may transmit data with the multi-link device by means of three links. Different buffered data corresponding to the multi-link device may be transmitted by means of different links among the three links. The second mapping relationship includes the mapping relationship between the buffered data of the terminal device that may transmit data with the network access device and the link identifier. The link identifier corresponding to the buffered data, that is, the second candidate target link identifier may be obtained by searching the second mapping relationship. Specifically, the traffic identifier of the buffered data may be used to identify the buffered data, and the second mapping relationship may specifically include the mapping relationship between the traffic identifier of the buffered data and the link identifier. According to the traffic identifier of the buffered data corresponding to the target terminal device, the second candidate target link identifier may be obtained by searching the second mapping relationship.

S2014, a target link identifier is determined according to the first candidate target link identifiers and the second candidate target link identifiers.

The target link identifier is intersection of the first candidate target link identifiers and the second candidate target link identifiers, such that the link identified by the target link identifier may transmit the cache data corresponding to the target terminal device between the network access device and the target terminal device.

For example, the target terminal device includes the multi-link device. The multi-link device includes three logical data transceiving stations, namely STA1, STA2 and STA3. STA1 corresponds to link 1, STA2 corresponds to link 2, and STA3 corresponds to link 3. The link identifier of link 1 is Link1, the link identifier of link 2 is Link2, and the link identifier of link 3 is Link3. The first candidate target link identifiers include Link1, Link2 and Link3. The buffered data in the network access device corresponds to the multi-link device, and the mapping relationship between the traffic identifier of the buffered data and the link identifier is shown in Table 7 in the above embodiment. If the traffic identifier of the buffered data is 2, the second candidate target link identifiers include Link2 and Link3. The target link identifiers include Link2 and Link3.

S2015, a broadcast message is generated according to the target AID and the target link identifier.

The broadcast message includes information used for representing the target AID and the target link identifier, such that the terminal device monitoring the broadcast message may determine whether the terminal device itself is the target terminal device, so as to perform the subsequent steps of sending the data poll message and receiving the buffered data.

In some examples, the above broadcast message may specifically include a traffic indication map (TIM) and a link indication map (LIM).

The traffic indication map is configured to identify a terminal device corresponding to the buffered data in the network access device, and in other words, the traffic indication map is used to identify the target terminal device. Specifically, the traffic indication map may indicate the AID corresponding to the target terminal device.

For example, Fig. 4 is a schematic structural diagram of a format of a traffic indication map provided by an embodiment of the disclosure. As shown in Fig. 4, the traffic indication map may include an Element ID, a Length, a delivery traffic indication map counter (DTIM Counter), a DTIM Period, Bitmap Control, and Partial Virtual bitmap, etc. Element ID is used to indicate that the information carries the traffic indication map. Length is used to indicate the length of the information. DTIM Counter is used to count down to transmission of a next specific TIM, that is, a DTIM. DTIM Period is used to indicate a transmission period of a specific TIM, that is, a DTIM. The Bitmap Control and the Partial Virtual bitmap jointly indicate the AID of the terminal device corresponding to the buffered data in the network access device.

The link indication map includes an AID corresponding to a terminal device supported by the network access device and a link identifier of an available link corresponding to the terminal device supported by the network access device. The terminal device supported by the network access device refers to a terminal device that may transmit data with the network access device. It should be noted that the terminal devices supported by the network access device include the target terminal device, but it does not mean that every terminal device supported by the network access device is the target terminal device. From the link indication map, the mapping relationship between the AID corresponding to the terminal device supported by the network access device and the link identifier of the available link corresponding to the terminal device supported by the network access device may be obtained.

The link indication map includes a first code and a second code. The first code includes a code of the AID of the terminal device supported by the network access device. The second code includes a code of the link identifier of the available link corresponding to the AID. The code may be a binary code. For example, if the AID is 4, the first code may be 0000100, and the second code may use 1 in the binary code to indicate the available link. For example, the second code is 00000111 meaning that the available links are Link 1, Link 2 and Link 3. For another example, the second code is 00000101 meaning that the available links are link 1 and link 3.

The link indication map may further include an information identifier, an information length and the number of available links of the network access device. The information identifier is used to indicate that the information is the link indication map. The information length is used to indicate the length of the information. The number of available links of the network access device is used to indicate the number of links through which the network access device may transmit data with the terminal device.

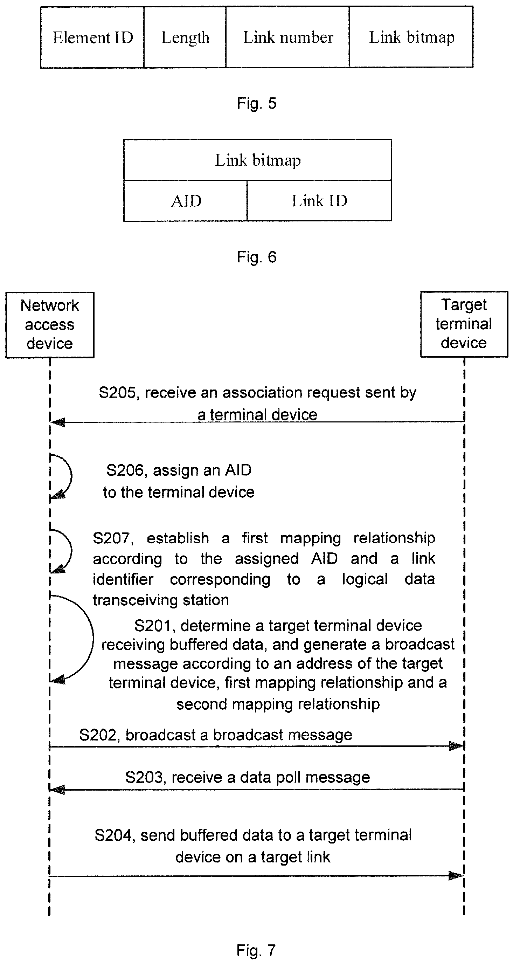

For example, Fig. 5 is a schematic structural diagram of a format of link indication map provided by an embodiment of the disclosure. As shown in Fig. 5, the link indication map includes information identifier element ID, an information length (namely Length), the number of available links of the network access device (link number), link bitmap and other fields. Information element ID is used to indicate that the information is the traffic indication map. Length is used to indicate the length of the information. Link number is used to indicate the number of links through which the network access device may transmit data with the terminal device. Link bitmap is used to indicate the AID corresponding to the terminal device supported by the network access device and a link identifier of an available link corresponding to the terminal device supported by the network access device. Fig.6 is a schematic structural diagram of a link bitmap field in Fig. 5. As shown in Fig. 6, a link bitmap field may include an AID field and a link ID field. The AID field may be the first code in the above embodiment, and the link ID field may be the second code in the above embodiment. The corresponding first code and second code correspond to the same terminal device.

By means of a newly defined broadcast message, the AID of each terminal device and the link identifier corresponding to each terminal device may be broadcast to each terminal device, and the AID of the target terminal device may be indicated. Each terminal device may determine whether itself is the target terminal device by means of the content in the broadcast message, and under the condition that the terminal device itself is the target terminal device, the link identifier corresponding to an available link of the terminal device may be obtained by searching the AID of each terminal device in the broadcast message and the link identifier of each terminal device, so as to facilitate subsequent transmission of the buffered data with the network access device.

The broadcast message in the embodiment of the disclosure may provide the AID and the link identifier, thereby improving link information between the network access device and the terminal device. Even if the number of links supported by different network access devices is different, the broadcast message may be compatible with different network access devices supporting the different numbers of links, and messages between the network access device and the terminal device may be correctly read without additional link-related instructions.

Fig. 7 is a flowchart of a method for transmitting data in a multi-link system applied to a network access device according to still another embodiment of the disclosure. Fig. 7 is different from Fig. 2 in that the method for transmitting data in a multi-link system shown in Fig. 7 may further include steps S205 to S207.

S205, an association request sent by a terminal device is received.

Before establishing an association with a network access device, the terminal device may first search for the network access device, and after finding the network access device, the terminal device sends an association request to the network access device. The association request includes an address of the terminal device and an address of a logical data transceiving station. The network access device receives the association request, obtains the address of the terminal device and the address of the logical data transceiving station, and may also obtain a mapping relationship between the address of the terminal device and the address of the logical data transceiving station. If the terminal device is a single-link device, the address of the logical data transceiving station is the same as or default to the address of the terminal device.

S206, an AID is assigned to the terminal device in response to the association request.

For the terminal device, the AID is unique. That is, different terminal devices have different AIDs. Under the condition that the terminal device includes a multi-link device, AIDs corresponding to logical data transceiving stations in the same multi-link device are the same. For example, the multi-link device MLD1 includes three logical data transceiving stations. An AID corresponding to the multi-link device MLD1 is 3, and the AIDs corresponding to the three logical data transceiving stations in the multi-link device MLD1 are all 3.

In some examples, in response to the association request sent by the terminal device, the network access device may search for a maximum of the assigned AID, add 1 to the maximum of the assigned AID, obtain an AID to be assigned, and assign the AID to be assigned to the terminal device sending the association request, so as to avoid repeated assigning of the assigned AID to different terminal devices. For example, the terminal device includes the multi-link device, and the network access device receives an association request sent by the multi-link device. In response to the association request, the network access device finds that assigned AIDs include 1, 2 and 3, adds 1 to the maximum of 3 of the assigned AIDs, obtains an AID to be assigned being 4, and assigns 4 to the multi-link device as the AID of the multi-link device and AIDs of logical data transceiving station in the multi-link device. Similarly, the process of assigning the AID to a single-link device is basically the same as the process of assigning the AID to the multi-link device, and will not be repeated herein.

In some other examples, in response to the association request sent by the terminal device, the network access device may search for the maximum of the assigned AID, detect whether all AIDs with values less than the maximum of the assigned AID have been assigned, and assign an unassigned AID (if any) with a value less than the maximum of the assigned AID to the terminal device sending the association request as the AID of the terminal device, so as to avoid repeated assigning of the assigned AID to different terminal devices, and reduce waste of unassigned AIDs. The terminal device including the single-link device and/or the multi-link device may adopt the AID assigning method, which is not defined herein.

S207, a first mapping relationship is established according to the assigned AID and a link identifier corresponding to a logical data transceiving station.

According to the logical data transceiving station, a terminal device to which the logical data transceiving station belongs may be determined, and the mapping relationship between the address of the terminal device and the address of the logical data transceiving station may be obtained. According to the AID assigned to the terminal device, the mapping relationship between the address of the terminal device and the AID may be obtained. According to a link identifier corresponding to the logical data transceiving station, a mapping relationship between the address of the logical data transceiving station and the link identifier may be obtained. The first mapping relationship may be established according to the mapping relationship between the address of the terminal device and the address of the logical data transceiving station, the mapping relationship between the address of the terminal device and the AID, and the mapping relationship between the address of the logical data transceiving station and the link identifier.

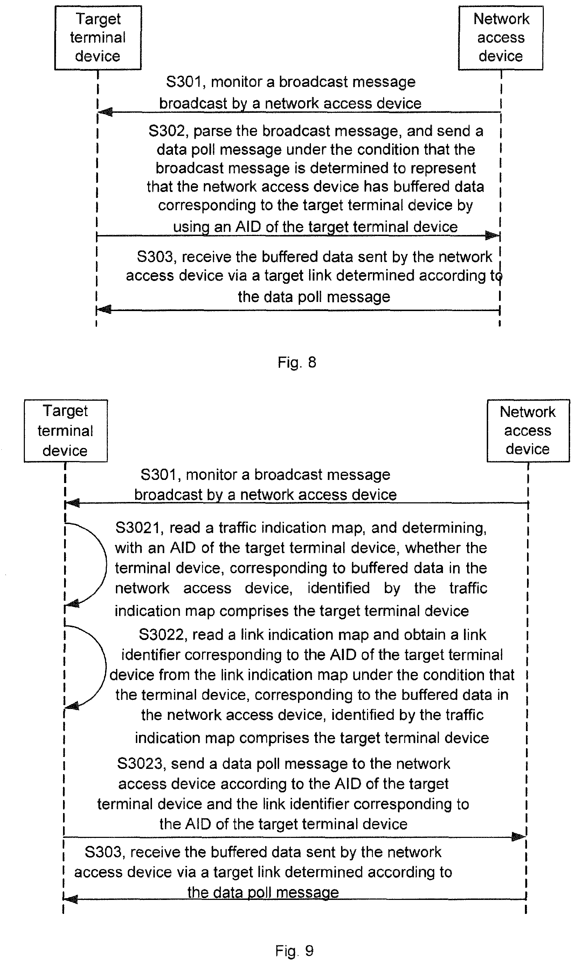

The embodiment of the disclosure may further provide a method for transmitting data in a multi-link system, which may be applied to a target terminal device. The target terminal device is any one of terminal devices that may transmit data with a network access device, that is, the terminal devices include the target terminal device. One AID is assigned to each terminal device. The target terminal device so called herein is to indicate a name and distinguish the target terminal device from other terminal devices in terms of name. Specifically, the target terminal device may include a multi-link device or a single-link device. The multi-link device includes two or more logical data transceiving stations. AIDs corresponding to the logical data transceiving stations in the same multi-link device are the same. Reference may be made to related descriptions in the above embodiments for details of the single-link device and the multi-link device, which will not be repeated herein. Fig. 8 is a flowchart of a method for transmitting data in a multi-link system applied to a target terminal device according to an embodiment of the disclosure. As shown in Fig. 8, the method for transmitting data in a multi-link system may include S301 to S303.

S301, a broadcast message broadcast by a network access device is monitored.

Specifically, the target terminal device may use its own monitoring logic data transceiving station to monitor the broadcast message. Under the condition that the target terminal device is a single-link device, the monitoring logical data transceiving station is a physical data transceiving station of the single-link device. Under the condition that the target terminal device includes a multi-link device, the monitoring logical data transceiving station is at least one logical data transceiving station in the multi-link device. That is, the multi-link device may use one or two or more logical data transceiving station thereof to monitor the broadcast message.

Reference may be made to related descriptions in the above embodiments for details of the broadcast message, which will not be repeated herein.

S302, the broadcast message is parsed and a data poll message is sent to the network access device under the condition that the broadcast message is determined to represent that the network access device has the buffered data corresponding to the target terminal device by using an AID of the target terminal device.

The multi-link device may specifically parse the broadcast message by using the monitoring logic data transceiver terminal, and determine whether the broadcast message represents that the network access device has the buffered data corresponding to the target terminal device by using the AID provided by the target terminal. The terminal device may be a multi-link device or a single-link device. Under the condition that the broadcast message is determined to represent that the network access device has the buffered data corresponding to the target terminal device, the data poll message is sent to the network access device to request the network access device to send the buffered data to the target terminal device. Under the condition that the broadcast message is determined to represent that the network access device does not have the buffered data corresponding to the target terminal device, the target terminal device may not send a data poll message to the network access device.

S303, the buffered data sent by the network access device via a target link determined according to the data poll message are received.

The target terminal device receives the buffered data sent by the network access device by means of the target link. The target link is determined according to the data poll message.

In the embodiment of the disclosure, the terminal device may monitor the broadcast message broadcast by the network access device, and the broadcast message may represent that the buffered data of the network access device correspond to the terminal devices. The target terminal device may determine whether the broadcast message represents that the network access device has the buffered data corresponding to the target terminal device by using its own AID. Under the condition that the broadcast message represents that the network access device has the buffered data corresponding to the target terminal device, the data poll message is sent to the network access device, such that the buffered data sent by the network access device via the target link may be received. One AID is assigned to each terminal device correspondingly. One association identifier is assigned to each terminal device correspondingly. Under the condition that the terminal device includes a multi-link device, a plurality of logical data transceiving stations in the same multi-link device correspond the same AID. Therefore, on the basis that data transmission is implemented between the terminal device and the network access device, the number of AIDs is effectively reduced, such that the existing number of the AID may support WLAN to operate normally. On the basis that normal data transmission between the terminal device and the network access device is guaranteed, neither an increase in the AID nor replacement of the terminal device in WLAN is required, thus reducing the maintenance cost of WLAN.

In some embodiments, the broadcast message includes a traffic indication map and a link indication map. The traffic indication map is configured to identify a terminal device corresponding to buffered data in the network access device. The link indication map includes an AID corresponding to a terminal device supported by the network access device and a link identifier of an available link corresponding to the terminal device supported by the network access device.

The link indication map includes a first code and a second code. The first code includes a code of the AID of the terminal device supported by the network access device, and the second code includes a code of the link identifier of the available link corresponding to the AID.

The link indication map further includes an information identifier, an information length and the number of available links of the network access device.

Reference may be made to related descriptions in the above embodiments for details of the traffic indication map and the link indication map, which will not be repeated herein.

Correspondingly, Fig. 9 is a flowchart of a method for transmitting data in a multi-link system applied to a terminal device according to another embodiment of the disclosure. Fig. 9 is different from Fig. 8 in that S302 in Fig. 8 may be detailed into S3021 to S3023 in Fig. 9.

S3021, a traffic indication map is read, and whether the terminal device, corresponding to buffered data in the network access device, identified by the traffic indication map includes the target terminal device is determined with an AID of the target terminal device.

The traffic indication map is configured to identify a terminal device corresponding to buffered data in the network access device. Specifically, bits in the traffic indication map may be read, and if a bit corresponding to the AID of the target terminal device is 1, it may be determined that the terminal device, corresponding to buffered data in the network access device, identified by the traffic indication map includes the target terminal device.

S3022, a link indication map is read and a link identifier corresponding to the AID of the target terminal device is obtained from the link indication map under the condition that the terminal device, corresponding to the buffered data in the network access device, identified by the traffic indication map includes the target terminal device.

The link indication map includes an AID corresponding to a terminal device supported by the network access device and a link identifier of an available link corresponding to the terminal device supported by the network access device. The target terminal device may obtain the link identifier corresponding to the AID of the target terminal device from the link indication map.

For example, a format structure of the link indication map is shown in Fig. 5, and the format structure of a link bitmap field in the link indication map is shown in Fig. 6. The Link number field of the link indication map is set to 3, which means that the number of available links of the network access device is 3. The terminal device includes a multi-link device, the multi-link device reads the Link number field of the link indication map and determines that the number of available links of the network access device is 3. Correspondingly, in the process of reading the link bitmap field, the multi-link device may read lowest three bits in binary codes in the link bitmap field, and a link corresponding to the bit with the value of 1 in the lowest three bits is the link for data transmission between the network access device and the multi-link device with the AID of "0000100". A link corresponding to the bit with the value of 0 in the lowest three bits is the link through which the network access device may not transmit data with the multi-link device with the AID of "0000100". The number of available links of the network access device in the link indication map may speed up reading of the link indication map by the terminal device, thus improving efficiency of the whole data transmission process between the network access device and the terminal device.

Under the condition that the terminal device, corresponding to the buffered data in the network access device, identified by the traffic indication map does not include the target terminal device, the step of reading the link indication map is not executed.

S3023, a data poll message is sent to the network access device according to the AID of the target terminal device and the link identifier corresponding to the AID of the target terminal device.

The data poll message is configured to request the buffered data corresponding to the target terminal device from the network access device. In some examples, the target terminal device includes a multi-link device, and the data poll message may be sent to the network access device by means of at least one logical data transceiving station in the multi-link device.

In some examples, under the condition that the data poll message in the above embodiment includes an AID corresponding to the target terminal device, the target link comprises at least one available link, corresponding to the buffered data, between the network access device and the target terminal device.

In some another examples, under the condition that the data poll message in the above embodiment includes the AID corresponding to the target terminal device, the target link is the link for the network access device to receive the data poll message.

In still some other examples, under the condition that the data poll message in the above embodiment includes the AID corresponding to the target terminal device and an expected link identifier, the target link is the link corresponding to the expected link identifier.

Reference may be made to related descriptions in the above embodiments for details of the target link, which will not be repeated herein.

The broadcast message in the embodiment of the disclosure may provide the AID and the link identifier, thereby improving link information between the network access device and the terminal device. Even if the number of links supported by different network access devices is different, the broadcast message in the unified format may be compatible with different network access devices supporting the different numbers of links, and messages between the network access device and the terminal device may be correctly read without additional link-related instructions.

It should be noted that the method for transmitting data in a multi-link system applied to the terminal device may be applied to the multi-link device and the single-link device, which is not defined herein.

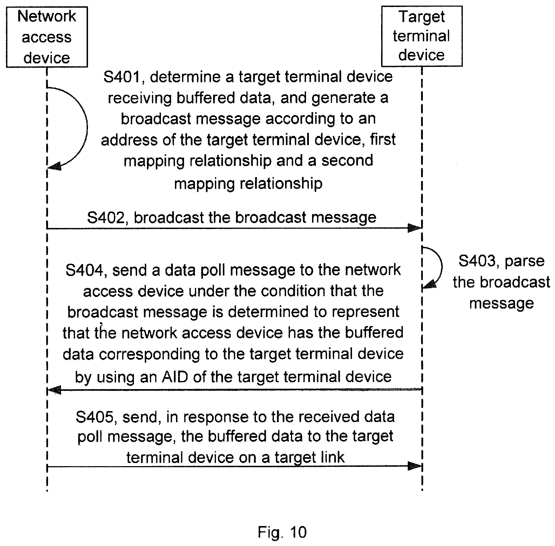

The embodiment of the disclosure further provides a method for transmitting data in a multi-link system, which may be applied to the multi-link system. Fig. 10 is a flowchart of a method for transmitting data in a multi-link system according to an embodiment of the disclosure. As shown in Fig. 10, the method for transmitting data in a multi-link system may include S401 to S405.

S401, a network access device determines a target terminal device receiving buffered data, and generates a broadcast message according to an address of the target terminal device, pre-established first mapping relationship and a pre-established second mapping relationship.

S402, the network access device broadcasts a broadcast message.

S403, a target terminal device parses the broadcast message.

S404, the target terminal device sends a data poll message to the network access device under the condition that the broadcast message is determined to represent that the network access device has the buffered data corresponding to the target terminal device by using an AID of the target terminal device.

S405, the network access device sends, in response to the received data poll message, the buffered data to the target terminal device on a target link.

Reference may be made to related descriptions in the above embodiments for details of S401 to S405, which will not be repeated herein. Reference may also be made to related descriptions in the above embodiments for other steps of the method for transmitting data implemented by the network access device and the target terminal device, which will not be repeated herein.

The embodiment of the present disclosure provides a network access device. The network access device may include a processing component, a broadcast component, a reception component and a sending component. The processing component may be configured to determine a target terminal device receiving buffered data, and generate a broadcast message according to an address of the target terminal device, pre-established first mapping relationship and pre-established second mapping relationship. The first mapping relationship include the mapping relationship between the address of the terminal device, the address of the logical data transceiving station, the AID and the link identifier. The second mapping relationship includes the mapping relationship between the buffered data and the link identifier. One association identifier is assigned to each terminal device correspondingly. The terminal device includes a multi-link device and/or a single-link device. The terminal device includes a target terminal device. In some examples, the first mapping relationship includes a first mapping relation and a second mapping relation. The first mapping relation includes a mapping relationship between the address of the terminal device and the AID. The second mapping relation includes a mapping relationship between the address of the terminal device, the address of the logical data transceiving station and the link identifier. In some other examples, the first mapping relationship may include a third mapping relation and a fourth mapping relation. The third mapping relation includes a mapping relationship between an address of a logical data transceiving station on each link of the network access device and the AID. The fourth mapping relation includes a mapping relationship between the address of the terminal device, the address of the logical data transceiving station and the link identifier.

The broadcast component may be configured to broadcast the broadcast message. The reception component may be configured to receive a data poll message sent by the target terminal device. The sending component may be configured to send, in response to the data poll message, the buffered data to the target terminal device on a target link.

In some embodiments, the data poll message includes an AID corresponding to the target terminal device, and the target link comprises at least one available link, corresponding to the buffered data, between the network access device and the target terminal device. In some another examples, the data poll message includes the AID corresponding to the target terminal device, and the target link is the link for the network access device to receive the data poll message. In still some another examples, the data poll message includes an AID and an expected link identifier corresponding to the target terminal device, and the target link may be a link corresponding to the expected link identifier.

In some examples, the processing component may be specifically configured to determine, in the first mapping relationship, a target AID and first candidate target link identifiers corresponding to the address of the target terminal device based on the address of the target terminal device; determine, in the second mapping relationship, second candidate target link identifiers corresponding to the buffered data based on the buffered data; determine a target link identifier according to the first candidate target link identifiers and the second candidate target link identifiers, where the target link identifier is intersection of the first candidate target link identifiers and the second candidate target link identifiers; and generate the broadcast message according to the target AID and the target link identifier.

In some embodiments, the broadcast message includes a traffic indication map and a link indication map. The traffic indication map is configured to identify a terminal device corresponding to buffered data in the network access device. The link indication map includes an AID corresponding to a terminal device supported by the network access device and a link identifier of an available link corresponding to the terminal device supported by the network access device. Specifically, the link indication map may include a first code and a second code. The first code includes a code of the AID of the terminal device supported by the network access device. The second code includes a code of the link identifier of the available link corresponding to the AID. In some examples, the above link indication map further includes an information identifier, an information length and the number of available links of the network access device.

In some embodiments, the reception component in the above embodiment may be further configured to receive an association request sent by the terminal device. The association request includes the address of the terminal device and the address of the logic data transceiving station.

The processing component in the above embodiment may be further configured to assign an AID to the terminal device in response to the association request, where under the condition that the terminal device includes a multi-link device, AIDs corresponding to logical data transceiving stations in the same multi-link device are the same; and the processing component is configured to establish a first mapping relationship according to the assigned AID and a link identifier corresponding to a logical data transceiving station. In the above embodiment, AIDs corresponding to different terminal devices are different.

The embodiment of the disclosure further provides a terminal device. One association identifier is assigned to each terminal device correspondingly. The terminal device may include a single-link device and/or a multi-link device. The multi-link device includes two or more logical data transceiving stations. The AIDs corresponding to the logical data transceiving stations in the same multi-link device are the same. The terminal device may include a monitoring component, a parsing component, a sending component and a reception component. The monitoring component may be configured to monitor a broadcast message broadcast by a network access device. In some examples, under the condition that the terminal device includes the multi-link device, the monitoring component may be integrated into a monitoring logical data transceiving station in the multi-link device, such that the multi-link device may monitor the broadcast message broadcast by the network access device by means of the monitoring logical data transceiving station. The monitoring logical data transceiving station is at least one logical data transceiving station in the multi-link device. The parsing component may be configured to parse the broadcast message. The sending component may be configured to send a data poll message to the network access device under the condition that the broadcast message is determined to represent that the network access device has buffered data corresponding to the terminal device by using the AID of the terminal device. The reception component may be configured to receive the buffered data sent by the network access device via a target link determined according to the data poll message.

In some examples, the data poll message includes the AID corresponding to the terminal device, and the target link comprises at least one available link, corresponding to the buffered data, between the network access device and the terminal device. In some other examples, the data poll message includes the AID corresponding to the terminal device, and the target link is the link for the network access device to receive the data poll message. In still some another examples, the data poll message includes an AID and an expected link identifier corresponding to the terminal device, and the target link is a link corresponding to the expected link identifier.

In some embodiments, the broadcast message includes a traffic indication map and a link indication map. The traffic indication map is configured to identify a terminal device corresponding to buffered data in the network access device. The link indication map includes an AID corresponding to a terminal device supported by the network access device and a link identifier of an available link corresponding to the terminal device supported by the network access device. Specifically, the link indication map includes a first code and a second code. The first code includes a code of the AID of the terminal device supported by the network access device. The second code includes a code of the link identifier of the available link corresponding to the AID. The link indication map may further include an information identifier, an information length and the number of available links of the network access device.

The above parsing component may be specifically configured to read a traffic indication map, and determine, with an AID of the terminal device, whether the terminal device, corresponding to buffered data in the network access device, identified by the traffic indication map includes the terminal device; and read a link indication map and obtain a link identifier corresponding to the AID of the terminal device from the link indication map under the condition that the terminal device, corresponding to the buffered data in the network access device, identified by the traffic indication map includes the terminal device.

The above sending component may be specifically configured to send a data poll message to the network access device according to the AID of the terminal device and the link identifier corresponding to the AID of the terminal device.

In some examples, the terminal device includes a multi-link device, and the above sending component may be integrated into at least one logical data transceiving station of the multi-link device, such that the multi-link device may send the data poll message to the network access device by means of the at least one logical data transceiving station.

The embodiment of the disclosure further provides a network access device. The network access device includes a memory, a processor and a computer program stored in the memory and executable on the processor. In one example, the above processor may include a central processing unit (CPU), or an application specific integrated circuit (ASIC), or may be configured as one or more integrated circuits to implement the embodiment of the disclosure. The memory may include a large-capacity memory for data or instructions. For example, instead of a limit, the memory may include a HDD, a floppy drive, a flash memory, an optical disc, a magnetooptical disc, a tape or universal serial bus (USB) drives, or two or more combinations of these items above. Where appropriate, the memory may include a medium that can be removed or non-removable (or secured). Where appropriate, the memory may turn on the inside or outside of the network access device at a terminal hot spot. In a particular embodiment, the memory is a non-volatile solid state memory. In a particular embodiment, the memory merely includes read-only memory (ROM). Where appropriate, the ROM may be a combination of mask-programmed ROM, programmable ROM (PROM), erasable PROM (EPROM), electrically erasable PROM (EEPROM), electrically alterable ROM (EAROM), a flash memory or a combination of two or more items above. The processor runs a computer program corresponding to an executable program code by reading the executable program code stored in memory for implementing the method for transmitting data in a multi-link system applied to a network access device in the above embodiment.

In one example, the network access device may further include a communication interface and a bus. The memory, the processor and the communication interface connect by means of the bus to complete mutual communication. The communication interface is mainly configured to achieve communication among components, apparatus, units and/or devices in the embodiment of the disclosure. The communication interface may further be configured to be connected to an input device and/or an output device. The bus includes a hardware, software, or both, and couples components of the network access device to one another. For example, instead of a limit, the bus may include an accelerated graphics port (AGP) or other graphics buses, an enhanced industrial standard architecture (EISA) bus, a front side bus (FSB), hyper-transport (HT) interconnection, an industrial standard architecture (ISA) bus, infiniband interconnection, a low pin count (LPC) bus, a memory bus, a micro-channel architecture (MCA) bus, a peripheral component interconnect (PCI) bus, a PCI-Express (PCI-X) bus, a serial advanced technology attachment (SATA) bus, a Video Electronics Standards Association local (VLB) bus, or other suitable bus or a combination of two or more items above. Where appropriate, the bus 704 may include one or more buses. Although the embodiment of the disclosure describes and shows a specific bus, the disclosure considers any suitable bus or interconnection.

The embodiment of the disclosure further provides a terminal device. The terminal device includes a memory, a processor and a computer program stored in the memory and executable on the processor. In one example, the above processor may include a central processing unit (CPU), or an application specific integrated circuit (ASIC), or may be configured as one or more integrated circuits to implement the embodiment of the disclosure. The memory may include a large-capacity memory for data or instructions. For example, instead of a limit, the memory may include a HDD, a floppy drive, a flash memory, an optical disc, a magnetooptical disc, a tape or universal serial bus (USB) drives, or a combination of two or more items above. Where appropriate, the memory may include a removable or non-removable (or secured) medium. Where appropriate, the memory may turn on the inside or outside of the terminal device at a terminal hot spot. In a particular embodiment, the memory is a non-volatile solid state memory. In a particular embodiment, the memory 801 includes a read-only memory (ROM). Where appropriate, the ROM can be a combination of mask-programmed ROM, programmable ROM (PROM), erasable PROM (EPROM), electrically erasable PROM (EEPROM), electrically alterable ROM (EAROM). a flash memory or a combination of two or more items above. The processor runs a computer program corresponding to an executable program code by reading the executable program code stored in the memory for implementing the method for transmitting data in a multi-link system applied to the target terminal device in the above embodiment.

In one example, the terminal device may further include a communication interface and a bus. The memory, the processor and the communication interface connect by means of the bus to complete mutual communication. The communication interface is mainly configured to achieve communication among components, apparatus, units and/or devices in the embodiment of the disclosure. The communication interface may further be configured to be connected to an input device and/or an output device. The bus includes a hardware, software, or both, and couples components of the terminal device to one another. For example, instead of a limit, the bus may include an accelerated graphics port (AGP) or other graphics buses, an enhanced industrial standard architecture (EISA) bus, a front side bus (FSB), hyper-transport (HT) interconnection, an industrial standard architecture (ISA) bus, infiniband interconnection, a low pin count (LPC) bus, a memory bus, a micro-channel architecture (MCA) bus, a peripheral component interconnect (PCI) bus, a PCI-Express (PCI-X) bus, a serial advanced technology attachment (SATA) bus, a video electronic standards association local (VLB) bus, or other suitable bus or a combination of two or more items above. Where appropriate, the bus 804 may include one or more buses. Although the embodiment of the disclosure describes and shows a specific bus, the disclosure considers any suitable bus or interconnection.

The embodiment of the disclosure may also provide a multi-link system including the network access device and the terminal device in the above embodiments. The terminal device may include a single-link device and/or a multi-link device, which is not defined herein. Reference may be made to related descriptions in the above embodiments for details of the network access device and the terminal device in the multi-link system and the multi-link device, which are not be repeated herein.

The embodiment of the disclosure further provides a computer readable storage medium storing a program or instruction. When executed by a processor, the program or instruction may implement the method for transmitting data in a multi-link system applied to the network access device in the above embodiment or the method for transmitting data in a multi-link system applied to the target terminal device in the above embodiment, may achieve the same technical effect, and will not be repeated herein to avoid repetition. The computer readable storage medium may include a read-only memory (ROM), a random access memory (RAM), a diskette or an optical disk, etc.

To be clear, each embodiment in the description is described in a progressive manner, mutual reference may be made to the same or similar parts of the embodiment, and each embodiment focuses on description of differences from other embodiments. For the network access device embodiment, the terminal device embodiment, the system embodiment and the computer readable storage medium embodiment, reference may be made to the description of the method embodiment for related contents. The disclosure is not limited to the specific steps and structures described above and shown in the figures. Those skilled in the art can, after understanding the spirit of the disclosure, make various changes, modifications and additions, or change the order of the steps. In addition, for the sake of simplicity, a detailed description of a known method or technology is omitted herein.

Various aspects of the disclosure are described above with reference to flowcharts and/or block diagrams of the method, the network access device, the terminal device, the system and computer program products according to embodiments of the disclosure. It should be understood that each block in the flowchart and/or the block diagram and a combination of the block in the flowchart and/or the block diagram may be implemented by programs or instructions. These programs or instructions may be provided for processors of a general-purpose computer, a special-purpose computer, or other programmable data processing devices to produce a machine, such that these programs or instructions executed by means of the processors of the computers or other programmable data processing apparatuses enable implementation of functions/actions specified in one or more blocks of the flowcharts and/or block diagrams. The processor may be, but is not limited to, a general-purpose processor, a special-purpose processor, a special-application processor or a field programmable logic circuit. It may also be understood that each block in the block diagram and/or flowchart, and a combination of blocks in the block diagram and/or flowchart can also be implemented by special-purpose hardware that performs specified functions or actions, or can be implemented by the combination of the special-purpose hardware and computer instructions.

Those skilled in the art should understand that the above embodiment is exemplary rather than restrictive. The different technical features in different embodiments can be combined to achieve beneficial results. On the basis of studying the accompanying drawing, the description and the claims, those skilled in the art should be able to understand and implement an embodiment with other changes of the embodiment revealed. In the claims, the term "including" does not exclude other apparatuses or steps, the quantifier "a" does not exclude more than one, the term "first" and "second" are used to indicate names rather than to represent any particular order. Any reference numerals in the claims should not be construed as limitation to the protection scope. The functions of a plurality of components in the claims may be implemented by separate hardware or software components. The presence of certain technical features in different dependent claims does not mean that they cannot be combined for beneficial results.

## Claims

1. A method for transmitting data in a multi-link system, wherein the method for transmitting data is applied to a network access device, and comprises:
determining a target terminal device receiving buffered data, and generating a broadcast message according to an address of the target terminal device, pre-established first mapping relationship and pre-established second mapping relationship, wherein the first mapping relationship comprises a mapping relationship between an addresses of terminal device, an address of logical station, an association identifier and link identifier, and the second mapping relationship comprises a mapping relationship between the buffered data and the link identifier, and one association identifier is correspondingly assigned to each terminal device;
broadcasting the broadcast message;
receiving a data poll message sent by the target terminal device; and
sending, in response to the data poll message, the buffered data to the target terminal device on a target link.

2. The method as claimed in claim 1, wherein the step of generating a broadcast message according to an address of the target terminal device, pre-established first mapping relationship and pre-established second mapping relationship comprises:
determining, in the first mapping relationship, a target association identifier and first candidate target link identifiers corresponding to the address of the target terminal device based on the address of the target terminal device;
determining, in the second mapping relationship, second candidate target link identifiers corresponding to the buffered data based on the buffered data;
determining a target link identifier according to the first candidate target link identifiers and the second candidate target link identifiers, wherein the target link identifier is intersection of the first candidate target link identifiers and the second candidate target link identifiers; and
generating the broadcast message according to the target association identifier and the target link identifier.

3. The method as claimed in claim 1, wherein the broadcast message comprises a traffic indication map and a link indication map;
the traffic indication map is configured to identify a terminal device corresponding to buffered data in the network access device; and
the link indication map comprises an association identifier corresponding to a terminal device supported by the network access device and a link identifier of an available link corresponding to the terminal device supported by the network access device.

4. The method as claimed in claim 3, wherein the link indication map comprises a first code and a second code, wherein the first code comprises a code of the association identifier of the terminal device supported by the network access device, and the second code comprises a code of the link identifier of the available link corresponding to the association identifier.

5. The method as claimed in claim 3, wherein the link indication map further comprises an information identifier, an information length and the number of available links of the network access device.

6. The method as claimed in claim 1, wherein
the data poll message comprises an association identifier corresponding to the target terminal device, and the target link comprises at least one available link, corresponding to the buffered data, between the network access device and the target terminal device;
or
the data poll message comprises the association identifier corresponding to the target terminal device, and the target link is a link for the network access device to receive the data poll message;
or
the data poll message comprises an association identifier and an expected link identifier corresponding to the target terminal device, and the target link is a link corresponding to the expected link identifier.

7. The method as claimed in claim 1, wherein before the step of generating the broadcast message according to the address of the target terminal device, pre-established first mapping relationship and pre-established second mapping relationship, the method further comprises:
receiving an association request sent by the terminal device, the association request comprising the address of the terminal device and the address of the logic data transceiving station;
assigning the association identifier to the terminal device in response to the association request, wherein under the condition that the terminal device is a multi-link device, association identifiers corresponding to logical data transceiving stations in the same multi-link device are the same; and
establishing the first mapping relationship according to the assigned association identifier and a link identifier corresponding to the logical data transceiving station.

8. The method as claimed in any one of claims 1-7, wherein the first mapping relationship comprises a first mapping relation and a second mapping relation;
the first mapping relation comprises a mapping relationship between the address of the terminal device and the association identifier; and
the second mapping relation comprises a mapping relationship among the address of the terminal device, the address of the logical data transceiving station and the link identifier.

9. The method as claimed in any one of claims 1-7, wherein the first mapping relationship comprises a third mapping relation and a fourth mapping relation;
the third mapping relation comprises a mapping relationship between an address of a logical data transceiving station on each link of the network access device and the association identifier; and
the fourth mapping relation comprises a mapping relationship among the address of the terminal device, the address of the logical data transceiving station and the link identifier.

10. The method as claimed in claim 1, wherein association identifiers corresponding to different terminal devices vary.

11. A method for transmitting data in a multi-link system, wherein the method for transmitting data is applied to a target terminal device, association identifiers are assigned to terminal devices in a one-to-one correspondence manner, the terminal devices comprise the target terminal device, and the method for transmitting data comprises:
monitoring the broadcast message broadcast by the network access device;
parsing the broadcast message, and sending the data poll message to the network access device under the condition that the broadcast message is determined to represent that the network access device has buffered data corresponding to the target terminal device by using the association identifier of the target terminal device; and
receiving the buffered data sent by the network access device via the target link determined according to the data poll message.

12. The method as claimed in claim 11, wherein the broadcast message comprises a traffic indication map and a link indication map, wherein the traffic indication map is configured to identify a terminal device corresponding to the buffered data in the network access device, and the link indication map comprises an association identifier corresponding to a terminal device supported by the network access device and a link identifier of an available link corresponding to the terminal device supported by the network access device; and
the step of parsing the broadcast message, and sending the data poll message to the network access device under the condition that the broadcast message is determined to represent that the network access device has buffered data corresponding to the target terminal device by using the association identifier of the target terminal device comprise:
reading the traffic indication map, and determining, with the association identifier of the target terminal device, whether the terminal device, corresponding to the buffered data in the network access device, identified by the traffic indication map comprises the target terminal device;
reading the link indication map and obtaining a link identifier corresponding to the association identifier of the target terminal device from the link indication map under the condition that the terminal device, corresponding to the buffered data in the network access device, identified by the traffic indication map comprises the target terminal device; and
sending the data poll message to the network access device according to the association identifier of the target terminal device and the link identifier corresponding to the association identifier of the target terminal device.

13. The method as claimed in claim 12, wherein the link indication map comprises a first code and a second code, wherein the first code comprises a code of the association identifier of the terminal device supported by the network access device, and the second code comprises a code of the link identifier of the available link corresponding to the association identifier.

14. The method as claimed in claim 12, wherein the link indication map further comprises an information identifier, an information length and the number of available links of the network access device.

15. The method as claimed in claim 11, wherein the target terminal device comprises a multi-link device; and
the step of sending a data poll message to the network access device comprises:
sending the data poll message to the network access device by means of at least one logical data transceiving station in the multi-link device.

16. The method as claimed in claim 11, wherein
the data poll message comprises an association identifier corresponding to the target terminal device, and the target link comprises at least one available link, corresponding to the buffered data, between the network access device and the target terminal device;
or
the data poll message comprises the association identifier corresponding to the target terminal device, and the target link is a link for the network access device to receive the data poll message;
or
the data poll message comprises an association identifier and an expected link identifier corresponding to the target terminal device, and the target link is a link corresponding to the expected link identifier.

17. A network access device, comprising:
a processing component configured to determine a target terminal device receiving buffered data, and generating a broadcast message according to an address of the target terminal device, pre-established first mapping relationship and pre-established second a mapping relationship, wherein the first mapping relationship comprises a mapping relationship between addresses of terminal devices, addresses of logical data transceiving stations, association identifiers and link identifiers, and the second mapping relationship comprises a mapping relationship between the buffered data and the link identifiers, and one association identifier is correspondingly assigned to each terminal device;
a broadcast component configured to broadcast the broadcast message;
a reception component configured to receive a data poll message sent by the target terminal device; and
a sending component configured to send, in response to the data poll message, the buffered data to the target terminal device on a target link.

18. A terminal device, wherein one association identifier is assigned to each terminal device correspondingly, and the terminal device comprises:
a monitoring component configured to monitor a broadcast message broadcast by a network access device;
a parsing component configured to parse the broadcast message;
a sending component configured to send a data poll message to the network access device under the condition that the broadcast message is determined to represent that the network access device has buffered data corresponding to the terminal device by using the association identifier of the terminal device; and
a reception component configured to receive the buffered data sent by the network access device via a target link determined according to the data poll message.

19. A network access device, comprising a processor, a memory, and a program or an instruction stored in the memory and executable on the processor, wherein the program or instruction implements the method for transmitting data in a multi-link system as claimed in any one of claims 1-10 when executed by the processor.

20. A terminal device, comprising a processor, a memory, and a program or an instruction stored in the memory and executable on the processor, wherein the program or instruction implements the method for transmitting data in a multi-link system as claimed in any one of claims 11-16 when executed by the processor.

21. A multi-link system, comprising the network access device as claimed in claim 19 and the terminal device as claimed in claim 20.

22. A computer-readable storage medium, storing a program or instruction, wherein the program or instruction implements the method for transmitting data in a multi-link system according to any one of claims 1-16 when executed by a processor.
